# FASCICULE DE BREVET EUROPEEN

(11) **EP 0 949 783 B1**
(45) Date de publication et mention de la délivrance du brevet: **06.09.2006**
(21) Numéro de dépôt: 99400542.9
(22) Date de dépôt: 08.03.1999
(51) Int. Cl.: H04L 12/56

(54) **Procédé d'acheminement de paquets dans un réseau de communication**
Leitweglenkungsverfahren von Paketen in einem Kommunikationsnetz
Packet routing method in a communication network

(30) Priorité: 09.04.1998 FR 9804430
(43) Date de publication de la demande: 13.10.1999
(73) Titulaire: ALCATEL, 75008 Paris (FR)
(72) Inventeur: Caraco, Jean-Jacques, 94120 Fontenay sous Bois (FR)
(74) Mandataire: Lamoureux, Bernard

(56) Documents cités:
- EP-A- 0 224 229
- EP-A- 0 253 940
- SPIEGEL E M ET AL: "AN ALTERNATE PATH ROUTING SCHEME SUPPORTING QOS AND FAST CONNECTIONSETUP IN ATM NETWORKS" PROCEEDINGS OF THE GLOBAL TELECOMMUNICATIONS CONFERENCE (GLOBECOM), SAN FRANCISCO, NOV. 28 - DEC. 2, 1994, vol. 2, 28 novembre 1994, pages 1224-1230, XP000488730 INSTITUTE OF ELECTRICAL AND ELECTRONICS ENGINEERS

## Description

La présente invention concerne un procédé d'acheminement de messages au sein d'un réseau de communication. Plus particulièrement, l'invention s'applique aux réseaux hétérogènes ou bien aux réseaux homogènes, en mode non connecté.

Il est connu que dans un réseau de communication les messages sont divisés en plusieurs paquets de données, ces paquets étant acheminés de façon plus ou moins indépendante à travers le réseau.

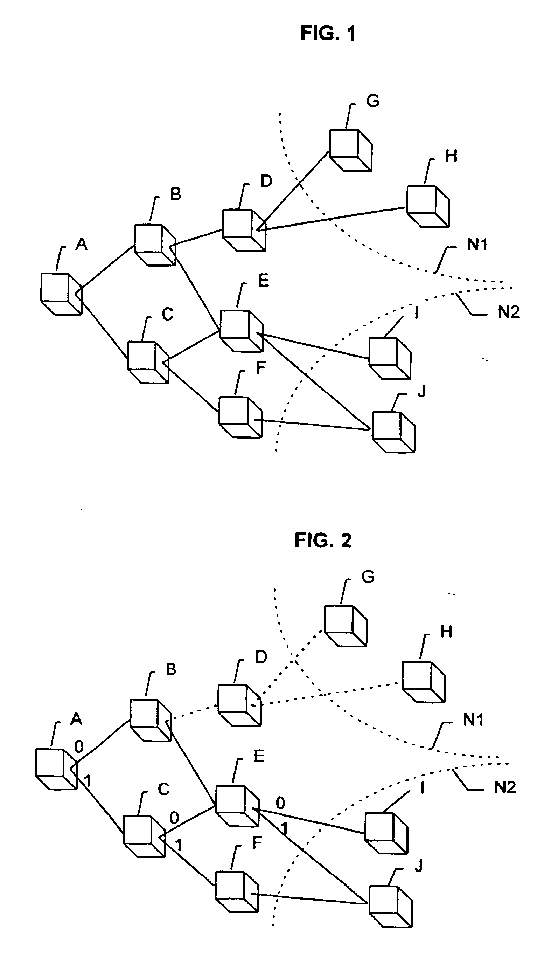

La figure 1 illustre un tel réseau de communication. Il est composé d'un ensemble de noeuds (références A à J), connectés les uns avec les autres. Le réseau est hétérogène, c'est-à-dire qu'il interconnecte des noeuds appartenant à plusieurs sous-réseaux de types différents. Sur la figure 1, le sous-réseau N1 peut par exemple être un réseau de type X.25, tandis que le sous-réseau N2 peut être de type IP *(Internet Protocol).*

Sur un tel réseau, on remarque qu'il existe plusieurs chemins entre un premier noeud dit émetteur et un second noeud dit destinataire. Par exemple, pour aller du noeud A vers le noeud I, un paquet de données peut emprunter le chemin A-B-E-I ou bien le chemin A-C-E-I.

Dans un réseau de communication, on peut distinguer deux grandes familles de procédé d'acheminement des messages: ceux dits en mode connecté, et ceux en mode non connecté. Nous décrirons dans ce qui suit un exemple de chacune de ces familles : le protocole X. 25 pour le mode connecté, et le protocole IP *(Internet Protocol)* pour le mode non connecté.

X.25 est une recommandation de l'ITU (*International Telecommunication Union)* qui définit un protocole d'échanges de données de contrôle d'informations au sein d'un réseau de données à commutation de paquets. Ce protocole peut être décomposé en trois couches qui correspondent aux trois couches les plus basses du modèle OSI *(Open Systems Interconnection)* tel qu'il est défini par la recommandation X.200 de l'ITU.

Une des fonctions de ce protocole est d'assurer la transmission ordonnée des paquets. Pour ce faire, X. 25 est en mode connecté. Ainsi la couche 3 ou couche Réseau (parfois appelée aussi couche paquet, dans la terminologie X. 25) comporte une notion de circuit virtuel qui permet la création d'une association temporaire ou permanente entre deux noeuds du réseau.

La transmission de données entre deux noeuds au sein d'un réseau géré en mode connecté peut se décomposer en les étapes suivantes :
- découpage des données en paquets,
- établissement d'un circuit virtuel au sein du réseau,
- transmission des paquets le long de ce circuit virtuel,
- libération du circuit virtuel précédemment établi,
- agrégation des paquets à la réception pour remettre les données sous leur forme originale.

Ce type de mécanisme d'acheminement, quoique répondant au problème de la réception ordonnée des paquets, présente de nombreux inconvénients qui le rendent inadapté dans certains cas.

En effet, l'établissement d'un circuit virtuel est une étape assez lourde, nécessitant la détention d'un contexte par chacun des noeuds traversés par le circuit virtuel.

Aussi, même dans le cas de la transmission de quelques octets de données, toute une phase d'établissement de circuit virtuel, impliquant la négociation des paramètres entre les noeuds concernés, est mise en oeuvre.

De la même façon, dans le cas d'une transmission multipoint (c'est-à-dire d'un émetteur vers plusieurs récepteurs), cette phase est mise en oeuvre autant de fois qu'il y a de récepteurs.

Le coût ainsi généré par l'établissement des circuits virtuels peut, dans certains cas, surcharger les capacités du réseau.

De surcroît, des informations relatives au circuit virtuel qui est établi et aux paramètres de ce circuit, sont stockées au sein de chaque noeud concerné. Cette information est susceptible d'être perdue en cas de panne du réseau ou lors d'une reconfiguration de ce réseau.

Le protocole IP (*Internet Protocol*) est un protocole de la couche Réseau ou couche 3, selon le modèle OSI.

Chaque paquet composant un message comporte dans un champs d'entête, l'adresse du noeud destinataire. À chaque noeud traversé, cette adresse est lue et le paquet est transmis vers un autre noeud.

Cet autre noeud est choisi en fonction d'une table de routage associé à chaque noeud et en fonction de la connaissance que possède le noeud courant de la charge instantanée du réseau.

Cela signifie que deux paquets successifs appartenant au même message peuvent emprunter deux chemins différents, selon les variations de l'état du trafic et des liaisons (rupture d'une liaison entre deux noeuds, par exemple). Par conséquent, l'ordre dans lequel le noeud destinataire reçoit les paquets n'est pas assuré, et il doit donc procéder à un réarrangement des paquets à la réception. Ce réarrangement peut être coûteux.

La demonde de brevet EP 0253 940 d'IBM décrit un procédé de routage dans lequel l'émetteur insère dans chaque trame émise un identificateur de routage déterminant le chemin que ladite trame doit suivre. Chaque noeud du réseau détermine de façon univoque le noeud vers lequel il doit émettre la trame, en fonction de cet identificateur de routage, qui est calculé en fonction du chemin que doit suivre la trame.

Les problèmes posés par chacun de ses protocoles peuvent être généralisés directement à tous les autres protocoles similaires.

Un premier but de la présente invention est de proposer une méthode pour acheminer les paquets appartenant à un même message, de sorte qu'ils arrivent sur le noeud de destination dans le même ordre que celui d'émission, sans établir une connexion entre les noeuds expéditeur et destinataire.

Un deuxième but est d'obtenir le même résultat avec un ensemble de messages. Les messages seront alors reçus par le noeud de destination dans le même ordre que celui d'émission.

Cela s'applique particulièrement bien aux réseaux ne permettant pas l'établissement de connexions bout en bout.

Un autre but rempli par la présente invention est de permettre l'acheminement des messages au sein d'un réseau de communication hétérogène sans que chacun des noeuds du réseau ait à connaître la sémantique des adresses de destination.

Pour cela, l'invention a pour un objet un procédé pour acheminer un ensemble de paquets de données au sein d'un réseau de communication formé d'un ensemble de noeuds, les paquets étant ordonnés de façon séquentielle, se caractérisant en ce que les paquets comportent un identificateur d'acheminement, et en ce qu'à la réception d'un paquet, chaque noeud transmet le paquet vers un noeud suivant déterminé par les étapes consistant à :
- déterminer un ensemble de noeuds possibles, chaque noeud déterminant parmi les noeuds qui lui sont contigus, ceux qui appartiennent à un chemin allant de ce noeud jusqu'à la destination indiquée par une adresse de destination contenue dans ce paquet,
- déterminer ledit noeud suivant parmi ledit ensemble de noeuds possibles en fonction dudit identificateur d'acheminement.

Selon des mises en oeuvre particulières de l'invention, le procédé peut posséder une ou plusieurs des caractéristiques suivantes :
- Les paquets comportent l'adresse d'un noeud destinataire, sur laquelle est basée la détermination de l'ensemble des noeuds possibles.
- Des symboles (par exemple des valeurs numériques) sont associés à chacun des noeuds possibles. Déterminer un noeud suivant consiste alors à déterminer un symbole parmi l'ensemble des symboles utilisés.
- Les symboles forment une liste de nombres entiers, éventuellement continue et commençant à 0, et le noeud suivant est déterminé par comparaison entre le résultat de l'opération « identificateur d'acheminement » modulo « cardinal de l'ensemble des noeuds possibles » et les symboles associés auxdits noeuds possibles.
- L'identificateur d'acheminement est attribué par une application logicielle, en fonction d'une loi associant des valeurs d'identificateurs d'acheminement à des noeuds dudit réseau de communication.
- Cette loi peut être mise en oeuvre sous la forme d'une table de correspondance.

L'invention, ses caractéristiques et ses avantages apparaîtront de façon plus claire dans la description qui suit en liaison avec les figures 1 à 3.
La figure 1, déjà commentée, représente un réseau de communication hétérogène.
La figure 2 illustre un premier exemple de mise en oeuvre du procédé selon l'invention, dans un réseau de communication hétérogène.
La figure 3 illustre un second exemple de mise en oeuvre de l'invention.

### Premier exemple

L'exemple de la figure 2 reprend un réseau hétérogène ayant la même structure que celui illustré par la figure 1. Le noeud A veut envoyer un paquet sur le réseau. Ce paquet comporte trois champs : un champ contenant une adresse, un champ contenant un identificateur d'acheminement et un champ contenant des données.

L'identificateur d'acheminement, dans cet exemple, est quelconque. Il peut par exemple être choisi de façon aléatoire par l'application qui émet le message sur le réseau. On peut prendre comme exemple la valeur 15.

L'adresse est une adresse propre au sous-réseau N2.

Les noeuds A à F n'appartiennent pas au sous-réseau N2. Ils ne sont donc pas en mesure d'interpréter correctement l'adresse contenue dans le paquet. Ils sont juste capables de déterminer que l'adresse correspond au sous-réseau N2 et que, par conséquent, le paquet doit être envoyé à un noeud appartenant à ce sous-réseau (I ou J), à charge pour ce dernier d'acheminer le paquet vers le noeud destinataire à partir de l'adresse qu'il contient et selon les protocoles propres à ce réseau N2.

Chaque noeud est connecté à un ensemble de noeuds. Il est connu que chaque noeud est capable de déterminer parmi cet ensemble, les noeuds qui permettent effectivement d'arriver à la destination. Autrement dit, chaque noeud est capable de déterminer si un noeud qui lui est voisin appartient à un chemin menant à I ou à J.

Par la suite, on appellera ensemble des noeuds possibles, l'ensemble des noeuds contigus au noeud courant et appartenant à un chemin allant de ce noeud courant vers la destination.

Pour le noeud A, cet ensemble de noeuds possibles est {B, C}. Pour le noeud B, cet ensemble vaut {E} puisque le noeud D n'appartient à aucun chemin menant à I ou à J.

Sur la figure 2, les connexions qui amènent à des noeuds non possibles sont tracées en traits pointillés.

L'étape suivante consiste à déterminer le noeud suivant, c'est-à-dire le noeud vers lequel le paquet va être effectivement acheminé, en fonction de cet ensemble de noeuds possibles et de l'identificateur d'acheminement contenu dans le paquet.

Plusieurs procédés peuvent être mis en oeuvre pour cette détermination.

Une première possibilité est de choisir le noeud suivant comme étant le noeud le moins récemment choisi parmi l'ensemble des noeuds possibles. Ce procédé permet donc d'optimiser la répartition de la charge sur le réseau. Ce noeud suivant est alors mémorisé par le noeud courant afin que tous les paquets comportant la même valeur de l'identificateur d'acheminement soient acheminés vers ce même noeud.

Une autre façon de faire consiste à calculer l'opération suivante: « identificateur d'acheminement » modulo « cardinal de l'ensemble des noeuds possibles », et de comparer son résultat à des symboles qui sont affectés à chacun des noeuds possibles. Pour cela, ces symboles peuvent être des valeurs affectées de façon continue à partir de 0.

Ainsi, pour le noeud A, le cardinal de l'ensemble des noeuds possibles {B, C} vaut 2. L'opération à calculer est donc : 15 modulo 2, ce qui vaut 1.

Cette valeur (1) est alors comparée à chacune des valeurs affectées aux noeuds possibles (0 pour B et 1 pour C).

La valeur 1 correspond au noeud C, et par conséquent, le paquet est acheminé vers le noeud C.

De la même façon, on détermine l'ensemble des noeuds possibles pour le noeud C. Cet ensemble est {E, F} qui est aussi de cardinal égal à 2. L'opération à calculer est donc la même (15 modulo 2) et le résultat aussi (1). Cette valeur 1 correspond au noeud F, ainsi qu'il est indiqué sur la figure 2. Le noeud F est donc choisi comme noeud suivant.

Pour le noeud F, l'ensemble des noeuds possibles est le singleton {J}, et le paquet est donc acheminé vers ce noeud-là qui appartient au sous-réseau N2.

Ce noeud J est à même d'interpréter complètement l'adresse contenue dans le paquet et d'acheminer le paquet vers I ou de le garder pour lui, en fonction de cette adresse. Le procédé d'acheminement qui est alors mis en oeuvre dans le sous-réseau N2 en fonction de l'adresse N2 est propre à ce sous-réseau et dépasse le cadre de la présente invention.

À travers cet exemple, on voit que ce procédé d'acheminement est complètement déterministe. Cela veut dire que tous les paquets qui comportent le même identificateur d'acheminement et la même adresse de destination suivront le même chemin dans le réseau.

Par conséquent, il suffit d'envoyer tous les paquets appartenant à un même message avec le même identificateur d'acheminement pour qu'ils arrivent dans l'ordre au noeud de destination.

On voit aussi, que le fait que le réseau soit hétérogène est sans effet sur le procédé d'acheminement. Cet exemple peut par conséquent s'appliquer directement à un réseau homogène.

Enfin, les valeurs de l'identificateur d'acheminement peuvent changer d'un message à l'autre : cela permet de mieux répartir la charge sur le réseau en faisant varier les chemins empruntés par les messages.

### Second exemple

Un second exemple de mise en oeuvre de l'invention consiste à acheminer un paquet uniquement avec l'aide de l'identificateur d'acheminement. L'application logicielle qui désire envoyer un paquet sur le réseau de communication possède une loi qui lui donne l'identificateur d'acheminement correspondant au noeud destinataire. Cette loi peut être mise en oeuvre sous la forme d'une table de correspondance.

Cet exemple concerne un réseau homogène aussi bien qu'un réseau hétérogène.

Dans cet exemple de mise en oeuvre, l'ensemble des noeuds possibles pour un noeud courant peut être l'ensemble des noeuds qui sont connectés à ce noeud courant sauf celui d'où provient le paquet.

Le champ contenant l'adresse est alors utilisé uniquement afin de permettre au noeud de destination de se reconnaître comme tel.

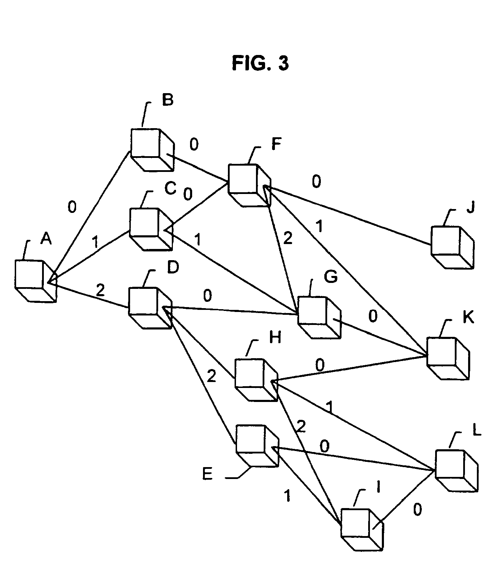

Le procédé de sélection du noeud suivant à partir de l'ensemble des noeuds possibles et l'identificateur d'acheminement peut être le même que dans le premier exemple. Comme précédemment donc, les symboles associés aux noeuds possibles peuvent être des valeurs entières affectées en continue à partir de 0, ainsi qu'il est illustré par la figure 3.

Dans cet exemple, la loi permettant à l'application de déterminer l'identificateur d'acheminement en fonction du noeud destinataire est donnée sous la forme d'une table de correspondance, dont la table ci-dessous forme un extrait pour les premières valeurs de cet identificateur d'acheminement.

| Identificateur d'acheminement | Chemin |
|---|---|
| 0 | BFJ |
| 1 | CGK |
| 2 | DEL |
| 3 | BFJ |
| 4 | CFK |
| 5 | DEI |
| 6 | BFJ |
| 7 | CGK |
| 8 | DEL |
| 9 | BFJ |
| 10 | CGK |

Cette table de correspondance peut être construite, lors de l'installation du réseau, en calculant, pour chacune des valeurs de l'identificateur d'acheminement, le chemin effectué par un paquet qui aurait cette valeur.

Par exemple, pour la valeur 5, le paquet serait acheminé vers le noeud D, car le résultat de l'opération « identificateur d'acheminement » (5) modulo « cardinal des noeuds possibles » (3) vaut 2, ce qui correspond au noeud D, comme indiqué sur le figure 3.

De la même façon, le paquet serait ensuite acheminé vers le noeud E, car le résultat de l'opération « identificateur d'acheminement » (5) modulo « cardinal des noeuds possibles » (3) vaut 2, ce qui correspond au noeud D, comme indiqué sur le figure 3.

Enfin, le paquet serait acheminé vers le noeud I, car le résultat de l'opération « identificateur d'acheminement » (5) modulo « cardinal des noeuds possibles » (2) vaut 1, ce qui correspond au noeud I.

On construit ainsi une table de correspondance qui permet aux applications du noeud A de choisir une valeur de l'identificateur d'acheminement en fonction du noeud qu'elles désirent atteindre.

On peut remarquer que plusieurs valeurs sont possibles pour atteindre un noeud donné.

Ainsi, pour atteindre un noeud particulier (par exemple, le noeud K), deux chemins sont possibles (sur l'ensemble des chemins donnés par le tableau) : CFK ou bien CGK. L'application logicielle désirant envoyer un message vers K choisit un de ces deux chemins suivant un critère qui lui est propre. En l'absence d'un tel critère, un choix aléatoire peut être mis en oeuvre.

Il en est de même pour la valeur de l'identificateur d'acheminement. Celui-ci doit être choisi parmi l'ensemble des identificateurs d'acheminement donnant le chemin voulu.

Tous les paquets composant le message envoyé vers le noeud K doivent alors comporter ce même identificateur d'acheminement. On est alors assuré qu'ils suivront tous le même chemin et que, par conséquent, ils arriveront dans le bon ordre au noeud de destination K.

De la même façon, tous les messages qui comportent le même identificateur d'acheminement suivront aussi le même chemin et arriveront dans le bon ordre au noeud de destination.

## Revendications

1. Procédé pour acheminer un ensemble de paquets de données au sein d'un réseau de communication formé d'un ensemble de noeuds, lesdits paquets étant ordonnés de façon séquentielle, **caractérisé en ce que** lesdits paquets comportent un identificateur d'acheminement, et **en ce qu'**à la réception d'un paquet, chaque noeud transmet ledit paquet vers un noeud suivant déterminé par les étapes consistant à :
• déterminer un ensemble de noeuds possibles, chaque noeud déterminant, parmi les noeuds qui lui sont contigus, ceux qui appartiennent à un chemin allant de ce noeud jusqu'à la destination indiquée par une adresse de destination contenue dans ce paquet,
• déterminer ledit noeud suivant parmi ledit ensemble de noeuds possibles en fonction dudit identificateur d'acheminement.

2. Procédé selon la revendication précédente, **caractérisé en ce que** lesdits paquets comportent en outre une adresse d'un noeud destinataire, et **en ce que** la détermination dudit ensemble de noeuds possibles est effectuée en fonction de ladite adresse.

3. Procédé selon l'une des revendications précédentes, **caractérisé en ce qu'**un symbole est associé à chacun desdits noeuds possibles, et que la détermination dudit noeud suivant est effectuée en choisissant un symbole parmi les symboles associés auxdits noeuds possibles.

4. Procédé selon la revendication précédente, **caractérisé en ce que** lesdits symboles forment une liste de nombres entiers, et **en ce que** ledit noeud suivant est déterminé par comparaison entre le résultat de l'opération, « identificateur d'acheminement » modulo « cardinal de l'ensemble des noeuds possibles », et les symboles associés auxdits noeuds possibles.

5. Procédé selon l'une quelconque des revendications 1 ou 3, **caractérisé en ce que** ledit identificateur d'acheminement est attribué par une application logicielle, en fonction d'une loi associant des valeurs d'identificateurs d'acheminement à des noeuds dudit réseau de communication.

6. Procédé selon la revendication précédente, **caractérisé en ce que** ladite loi est mise en oeuvre sous la forme d'une table de correspondance.

## Claims

1. A method of routing a set of sequentially ordered data packets in a communications network formed of a set of nodes, **characterized in that** each of said packets includes a routing identifier and, on receiving a packet, each node forwards said packet to a next node determined by the following steps:
determining a set of possible nodes, each node determining which of the nodes that are contiguous with it belong to a path going from that node to the destination indicated by a destination address contained in the packet, and
determining said next node from said set of possible nodes as a function of said routing identifier.

2. A method according to claim 1, **characterized in that** said packets further contain an address of a destination node and said set of possible nodes is determined as a function of said address.

3. A method according to either preceding claim, **characterized in that** a symbol is associated with each of said possible nodes and said next node is determined by selecting a symbol from the symbols associated with said possible nodes.

4. A method according to claim 3, **characterized in that** said symbols form a list of integers and said next node is determined by comparing the symbols associated with said possible nodes and the result of the operation "routing identifier" modulo "the cardinal number of the set of possible nodes".

5. A method according to claim 1 or claim 3, **characterized in that** said routing identifier is assigned by a software application as a function of a law associating routing identifier values with nodes of said communications network.

6. A method according to claim 5, **characterized in that** said law takes the form of a correspondence table.

## Patentansprüche

1. Verfahren für die Leitweglenkung eines Komplexes aus Datenpaketen in einem Kommunikationsnetz, das gebildet wird aus einem Komplex von Knoten, wobei diese Pakete sequenziell geordnet sind, **dadurch gekennzeichnet, dass** diese Pakete einen Leitweglenkungsidentifikator enthalten, und **dadurch**, dass beim Empfang eines Pakets jeder Knoten dieses Paket an einen folgenden Knoten überträgt, der durch Schritte festgelegt wird, welche bestehen aus:
• Festlegung eines Komplexes von möglichen Knoten, wobei jeder Knoten aus den ihm benachbarten Knoten diejenigen ermittelt, die zu einem Weg gehören, der von diesem Knoten bis zu dem Ziel geht, das durch eine Empfangsadresse angegeben wird, die in diesem Paket enthalten ist,
• Festlegung dieses Knotens aus diesem Komplex von möglichen Knoten in Abhängigkeit von diesem Leitweglenkungsidentifikator.

2. Verfahren gemäß dem vorstehenden Anspruch, **dadurch gekennzeichnet, dass** diese Pakete außerdem eine Adresse eines Empfängerknotens enthalten, und **dadurch**, dass die Ermittlung dieses Komplexes von möglichen Knoten in Abhängigkeit von dieser Adresse erfolgt.

3. Verfahren gemäß einem der vorstehenden Ansprüche, **dadurch gekennzeichnet, dass** mit diesen möglichen Knoten jeweils ein Symbol verknüpft ist, und dass die Ermittlung dieses folgenden Knotens durch Auswahl eines Symbols aus den mit diesen möglichen Knoten verknüpften Symbolen erfolgt.

4. Verfahren gemäß dem vorstehenden Anspruch, **dadurch gekennzeichnet, dass** diese Symbole eine Liste ganzer Zahlen bilden und **dadurch**, dass dieser folgende Knoten ermittelt wird durch Vergleich zwischen dem Ergebnis der Operation "Leitweglenkungsidentifikator" mod. "Kardinalzahl der Gesamtheit/des Komplexes der möglichen Knoten" und den Symbolen, die mit diesen möglichen Knoten verknüpft sind.

5. Verfahren gemäß einem der Ansprüche 1 oder 3, **dadurch gekennzeichnet, dass** dieser Leitweglenkungsidentifikator von einer Softwareanwendung zugeteilt wird, in Abhängigkeit von einem Gesetz, das Leitweglenkungsidentifikatorenwerte mit Knoten dieses Kommunikationsnetzes verknüpft.

6. Verfahren gemäß dem vorstehenden Anspruch, **dadurch gekennzeichnet, dass** dieses Gesetz in Form einer Verbindungstabelle ausgeführt wird.
